# FASCICULE DE BREVET EUROPEEN

(11) **EP 0 635 159 B1**
(45) Date de publication et mention de la délivrance du brevet: **27.03.1996**
(21) Numéro de dépôt: 93909001.5
(22) Date de dépôt: 07.04.1993
(51) Int. Cl.: H01B 13/00, B29C 63/06

(54) **PROCEDE ET MACHINE DE FABRICATION D'UN FAISCEAU D'ELEMENTS FILAIRES GAINES**
VERFAHREN UND VORRICHTUNG ZUM HERSTELLEN EINES UMHÜLLTEN LEITUNGSBÜNDELS
PROCESS AND MACHINE FOR MANUFACTURING SHEATHED WIRE HARNESSES

(30) Priorité: 07.04.1992 FR 9204233
(43) Date de publication de la demande: 25.01.1995
(73) Titulaire: PLASTO S.A., F-21304 Chenove Cédex (FR)
(72) Inventeur: Bigot, Henri, F-94000 Créteil (FR); Caure, Michel, F-97419 La Possession (FR)
(74) Mandataire: Robert, Jean-Pierre
(86) Numéro de dépôt international: FR9300348
(87) Numéro de publication internationale: WO9320565

(56) Documents cités:
- DE-A- 2 802 138
- DE-A- 3 309 348
- FR-A- 2 664 850
- US-A- 3 128 214
- US-A- 4 566 502

## Description

La présente invention concerne un procédé et une machine pour fabriquer de manière économique et rapide un faisceau d'éléments filaires du genre câbles électriques ou tubulures comportant au moins un embranchement, semblable à ceux que l'on peut rencontrer dans les véhicules automobiles.

Dans le domaine automobile, le câblage électrique consiste en général à préparer un ou plusieurs faisceaux de fils sur un dispositif de montage, à rassembler les fils au moyen d'un enrubannage ou une gaine en matière plastique fendue et à recouvrir l'ensemble d'une mousse de polyuréthanne ou d'une structure en feutrine adhésive.

Cette mise sous gaine ou cet enrubannage ont pour fonction essentielle de donner au faisceau une certaine cohésion de manière à pouvoir l'installer aisément le long d'une structure du véhicule et forme en même temps un revêtement souple qui permet d'absorber les vibrations et d'amortir les chocs entre le faisceau et la carrosserie, chocs qui sont générateurs de bruit.

La réalisation de ces faisceaux est en général manuelle, prend beaucoup de temps, et les matériaux employés résistent mal au vieillissement ou aux conditions ambiantes sévères qui existent sous le capot d'un véhicule automobile.

Il existe plusieurs procédés pour réaliser une gaine autour d'un faisceau de câbles électriques et l'un d'eux consiste à enfermer le faisceau de câbles dans un ruban, en enroulant le ruban transversalement à lui-même autour du faisceau et en réunissant les deux boras latéraux de ce ruban (voir FR-2664 850 ou DE-3 309 348). Ce procédé est notamment utilisé dans le calorifugeage des canalisations. Le problème qui est mal résolu par les procédés et les dispositifs connus est celui du passage des dérivations ou des embranchements de faisceaux.

Pour vaincre cette difficulté mais de manière non satisfaisante, on a déjà proposé de gainer des faisceaux possédant des embranchements en réalisant ces faisceaux sur une planche (voir DE-2 802 138) qui possède des moyens pour fixer la géométrie de chacun des fils qui le constituent, la planche comportant un matériau en feuille découpée selon la forme du faisceau et de ses embranchements, et sur lequel sont disposés les fils dans leur forme définitive, le tout étant recouvert par un même matériau en feuille découpée de manière similaire, les fils du faisceau étant enfermés entre ces deux matériaux que l'on réunit par leurs bords par collage, soudage ou tout autre moyen. Cette méthode qui tient de l'artisanat n'apporte pas une solution satisfaisante au gainage rapide des faisceaux possédant des dérivations.

L'invention se distingue des techniques antérieures de gainage d'un faisceau de câbles ou de tubulures dès la manière de considérer le problème à résoudre. En effet, un faisceau comportant des dérivations doit être considéré comme l'addition de plusieurs faisceaux qu'il faut traiter successivement en admettant qu'au point d'embranchement de chaque dérivation le gainage ne soit pas complètement réalisé. Admettre cette imperfection va à l'encontre des préjugés en matière de gainage et d'isolation, alors que pour le cas particulier des câbleries et faisceaux dans les véhicules automobiles, le gainage n'est pas là pour protéger de manière hermétique les fils du faisceau, mais essentiellement mis en oeuvre à des fins de calfeutrage pour éviter les bruits. Ainsi, admettre une petite imperfection dans le gainage des faisceaux de câblerie de véhicules automobiles ne va pas du tout à l'encontre de l'effet technique principal que l'on souhaite obtenir.

A cet effet donc, l'invention a pour premier objet un procédé de fabrication d'un faisceau d'éléments filaires du genre câbles électriques ou tubulures de longueur finie, comportant au moins un point d'embranchement pour une branche dérivée, selon lequel on enveloppe les éléments filaires dans un matériau isolant thermofusible plan roulé transversalement autour d'eux, les bords longitudinaux de ce matériau étant réunis par soudure.

Selon l'invention, dans le cas d'un faisceau à dérivation, on procède au gainage successif de chacune des branches du faisceau au moyen d'un ruban enroulé transversalement autour des éléments filaires composant ces branches et dont les bords sont réunis par soudure sauf à l'endroit de chaque point d'embranchement de chaque branche. Le gainage d'un faisceau multibranches ainsi réalisé laisse donc apparaître la racine de chaque branche sur la branche principale de laquelle elle est issue. Cette imperfection apparente du gainage ne nuit en rien aux qualités notamment phoniques du faisceau ainsi réalisé. En revanche, le procédé mis en oeuvre permet une économie importante de temps et de coût de revient des opérations de gainage, ainsi que leur automatisation.

Selon un mode de réalisation particulier de l'invention, l'apport calorifique pour la soudure est réalisé par soufflage d'air chaud sur la face extérieure d'une marge du ruban et sur la face intérieure de sa marge opposée pendant que ces marges défilent devant le flux d'air chaud en étant maintenues de manière à former un dièdre, la soudure consistant ensuite à rabattre l'une contre l'autre les marges ainsi chauffées. L'utilisation d'un flux chaud est intéressant par la souplesse de sa mise en oeuvre.

De manière préférée dans ce mode de réalisation, on règle l'apport calorifique en détournant une partie réglable du flux d'air chaud normalement dirigé dans l'angle du dièdre susdit. Cette disposition permet d'utiliser une source de production calorifique à débit constant de fonctionnement facile et régulier et sûr, l'apport de calories nécessaires à la soudure étant ainsi réglé indépendamment du fonctionnement de la source primaire et pouvant être facilement asservi par exemple à la vitesse de défilement du faisceau et de sa gaine devant le flux d'air chaud.

Au passage des embranchements, on procède à un détournement supplémentaire du flux d'air chaud, voire à son détournement total.

Un second objet de l'invention consiste en une machine de fabrication d'un faisceau d'éléments filaires du genre câbles électriques ou tubulures de longueur finie comportant au moins un point d'embranchement pour une branche dérivée, par enveloppement de ces éléments dans un ruban de matériau isolant thermofusible roulé transversalement autour de ceux-ci et dont les bords longitudinaux sont réunis par soudure, qui comporte une tête de soudure comprenant deux rangées d'une pluralité de galets d'entraînement ensemble du faisceau et du ruban, préalablement conformé en V par un guide situé en amont de ces galets, ces rangées de galets définissant entre elles un chemin de passage du faisceau, ouvert en partie supérieure, et s'étendant successivement sous un premier guide horizontal de rabattement de l'une des branches du V contre le faisceau, sous une buse de soufflage d'air chaud dans l'angle formé par la branche rabattue et la branche non rabattue du V et sous un second guide horizonzal de rabattement de la seconde branche du V sur la première déjà rabattue. On comprend que par cette machine la formation de la gaine tubulaire se fait par soudure de deux marges opposées d'un ruban se recouvrant. Cette soudure à l'air chaud, connue en elle-même, présente dans le cas de l'invention l'avantage de la souplesse de son réglage et de son asservissement d'une part à la vitesse de défilement du faisceau dans la tête de soudure, et d'autre part à la nécessité d'interrompre cette soudure au passage des points d'embranchement d'une branche dérivée de la branche que l'on est en train de gainer.

Pour permettre le passage des embranchements, les guides horizontaux sont effaçables à l'encontre d'un organe de rappel tendant à les maintenir en position de service. Cet effacement est réalisé dans un plan parallèle à la direction du chemin de passage du faisceau.

Parmi les autres caractéristiques de l'invention on mentionnera celle concernant la buse de soufflage de l'air chaud qui comporte une dérivation, en amont de son extrémité au-dessus du chemin de passage, dont la section est réglable en fonction de la vitesse d'entraînement du faisceau par les galets. Cette buse de soufflage peut comporter une seconde dérivation dont la section est ouverte ou fermée selon qu'un embranchement du faisceau est présent ou absent dans le chemin de passage.

D'autres caractéristiques et avantages de l'invention ressortiront de la description donnée ci-après d'un de ces modes de réalisation.

Il sera fait référence aux dessins annexés dans lesquels :

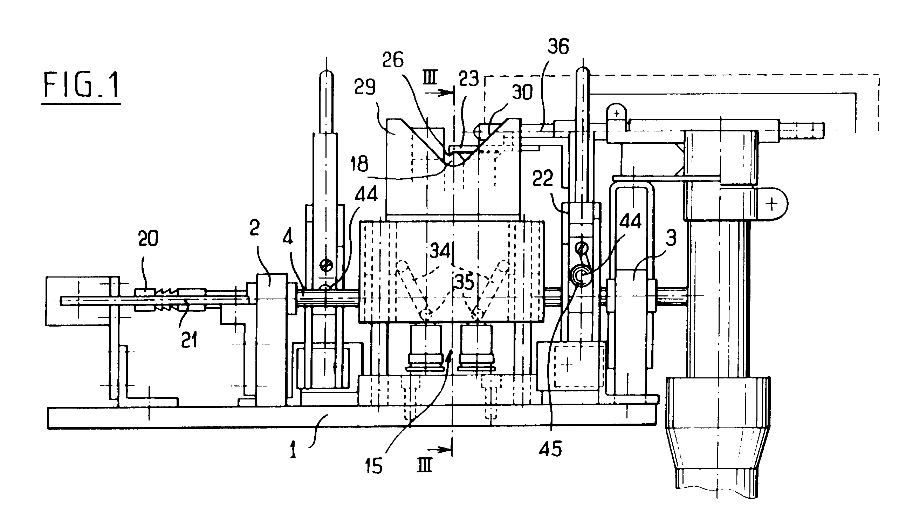

- la figure 1 est une vue en élévation d'une machine selon l'invention,
- la figure 2 est une vue de dessus de cette machine et notamment de la tête de soudure qu'elle met en oeuvre,
- la figure 3 est une vue en coupe selon la ligne III-III de la figure 1 de la tête de soudure de la machine selon l'invention dans une variante de réalisation,
- la figure 4 illustre schématiquement le procédé mis en oeuvre pour deux tailles de faisceaux gainés,
- la figure 5 est une vue schématique en coupe d'une buse de soufflage d'air chaud mis en oeuvre dans l'invention.

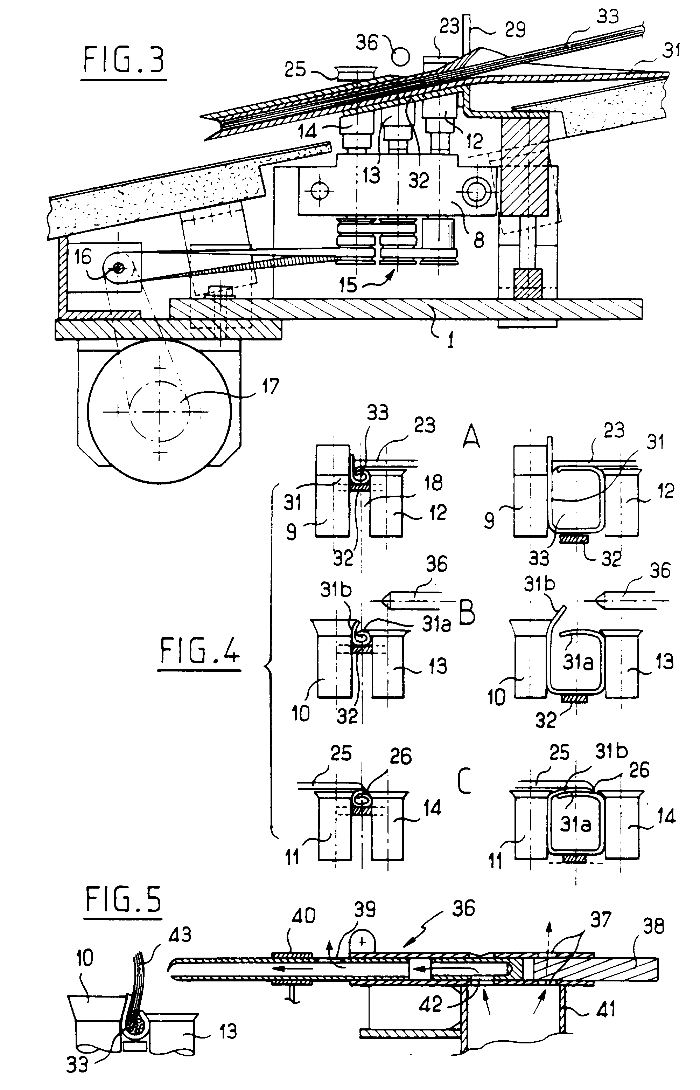

Aux figures, on remarque que la machine comporte un socle 1 qui peut être constitué par exemple par une table de travail. Ce socle comporte deux éléments de bâti 2 et 3 verticaux, qui portent à coulissement des tiges 4 et 5 paralléles entre elles et à la table de travail, reliées entre elles par l'une de leurs extrémités au moyen d'un palonnier 6 horizontal articulé en son milieu sur le bâti 2. Les tiges 4 et 5 forment un support pour deux blocs 7 et 8, chaque bloc formant le support d'un groupe de trois galets 9, 10, 11 pour le bloc 7 et 12, 13, 14 pour le bloc 8. Le bloc 7 est broché sur la tige 4 par l'une de ses extrémités, son autre extrémité étant montée coulissante sur la tige 5 tandis que le bloc 8 est broché sur la tige 5 et son autre extrémité est montée coulissante sur la tige 4. Chaque bloc supporte également sous sa face inférieure des poulies d'entraînement de chacun des ensembles de galets qu'il porte, ces poulies d'entraînement notées 15 sur la figure 3 étant accouplées ensemble au moyen de courroies et accouplées à un arbre moteur 16 lui-même accouplé à un dispositif d'entraînement 17 disposé sous le socle 1. L'arbre 16 est parallèle aux tiges 4 et 5 de sorte que la courroie qui le relie à l'ensemble des poulies 15 de chaque bloc peut coulisser le long de cet arbre 16 lorsque les blocs se déplacent le long des tiges 4 et 5.

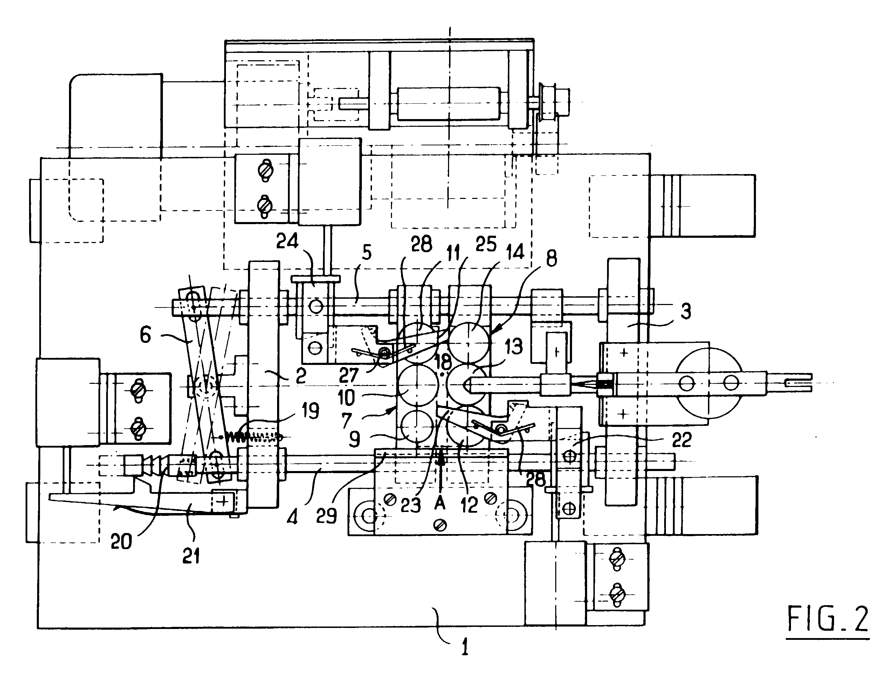

Les deux groupes de rouleaux 9, 10, 11 ; 12, 13, 14 déterminent entre eux un chemin de passage 18 dont la largeur est réglable. En effet, comme représenté sur la figure 2, ce chemin de passage 18 est à sa largeur minimale. Si on fait pivoter le palonnier 6 dans le sens des aiguilles d'une montre autour de son articulation sur le support 2, on repousse la tige 5 vers la droite donc le bloc 8 qui lui est attelé et on tire la tige 4 vers la gauche donc le bloc 7 qui lui est attelé. Un ressort 19 attelé entre le support 2 et le palonnier 6 tend à placer les deux blocs 7 et 8 au plus près l'un de l'autre et à rendre minimale la largeur du passage 18. L'extrémité de gauche sur la figure 2 de la tige 4 possède un crantage 20 qui peut coopérer avec un levier de verrouillage 21 de sorte qu'on contrarie l'effet du ressort 19 lorsque le levier de verrouillage s'engage dans l'une des encoches 20, pour maintenir la largeur du passage 18 à une dimension plus importante que sa dimension minimale. Cette disposition permet de maintenir le passage 18 dans sa plus grande largeur possible afin de faciliter l'introduction d'un faisceau à gainer entre les deux groupes de galets puis, cette introduction étant faite, en déverrouillant la tige 4 d'assurer au moyen du ressort 19, une pression constante des galets sur ce faisceau, quelle que soit sa dimension.

Sur la tige 4 est également broché un support 22 pour un guide supérieur 23 qui s'étend au-dessus du premier galet 12 et au-dessus du chemin de passage 18. On comprend que ce guide, solidaire de la tige 4, est fixe par rapport au bloc 7, et donc s'étend sur la totalité de la largeur du passage 18 quelle qu'elle soit.

De la même manière, un support 24 pour un autre guide supérieur 25 est solidaire de la tige 5, le guide 25 s'étendant au-dessus du galet 11 porté par le bloc 7.

Chacun des guides 23 et 25 est constitué par une palette horizontale comportant un becquet d'extrémité 26 tourné vers le bas, cette palette étant articulée sur le support correspondant 22, 24 autour d'un axe vertical 27 pour lui permettre de s'effacer au passage d'un obstacle rigide tel par exemple qu'une dérivation du faisceau, circulant dans le chemin 18 et s'étendant au-dessus du niveau des galets 9 à 14. Cet effacement se fait donc autour de l'axe 27 à l'encontre d'un organe ressort 28 de rappel de chaque guide dans sa position s'étendant au-dessus du chemin de passage 18.

Le sens de circulation d'un faisceau à gainer entre les deux blocs de galets est noté par la flèche A sur la figure 2, les galets d'entrée sont donc les galets 9 et 12. En amont de ces galets d'entrée, la machine comporte un guide 29 qui possède une ouverture en V 30 permettant de relever chacun des bords d'un ruban de matériau de gainage 31 introduit dans le chemin de passage selon le sens A. Le guide 29 comporte une languette 32 s'étendant entre les galets 9 à 14 et formant le fond du chemin de passage 18.

Sur la figure 3 on a représenté cette languette 32 inclinée de manière que l'action d'entraînement des galets sur le faisceau qui passe dans le chemin 18 ait une composante hélicoïdale tendant à resserrer le ruban 31 autour des éléments filaires 33 qui constituent les éléments du faisceau à gainer et qui sont introduits dans le passage 18 et logés au fond du V que forme le ruban 31 dont les bords sont relevés par le guide 29. Bien entendu la languette 32 pourrait s'étendre horizontalement entre les galets si cet effet de serrage de la gaine autour du faisceau filaire 33 n'est pas recherché.

L'altitude de la languette 32 donc du fond du chemin de passage 18 peut être réglée automatiquement en fonction de la largeur de ce chemin de passage. A cet effet, le guide 29 peut être réglable en hauteur, par exemple au moyen de surfaces de came 34 (des lumières obliques) qui coopèrent avec des doigts de positionnement 35 solidaires des blocs supports de galets 7 et 8, de sorte que l'écartement de ces blocs entraîne l'abaissement relatif du guide frontal 29.

Entre les deux guides horizontaux 23 et 25 la tête de soudure comporte au-dessus des galets centraux une buse 36 de soufflage d'air chaud représenté en coupe à la figure 5. Cette buse 36 comporte un premier évent 37 qui peut être plus ou moins obturé par un piston 38 selon le degré d'enfoncement de ce piston dans la buse 36, et un second évent 39 qui peut être plus ou moins obturé par une douille 40 déplaçable également le long de la buse 36. L'alimentation en air chaud de la buse 36 provient d'un caisson 41 qui est issu d'une source à débit constant. Ce caisson 41 communique avec l'intérieur de la buse 36 par un orifice 42 alors que l'évent 37 constitue une voie de détournement de l'air chaud avant même que celui-ci n'ait traversé l'orifice 42. La position du piston 38 peut être asservie à la vitesse d'entraînement du faisceau, c'est-à-dire la vitesse de rotation de l'organe moteur 17 alors que la position de la douille 40 peut être une position d'obturation de l'évent 39 ou une ouverture complète de cet évent selon que, au niveau du chemin 18 de passage du faisceau entre les galets, on a ou non détecté la présence d'un embranchement 43.

On notera également que pour dégager complétement le passage 18 et permettre un accès supérieur à ce passage même au droit des guides 23 et 25, les supports 22 et 24 de ces guides sont en deux parties articulées l'une à l'autre autour d'un axe horizontal 44 qui permet de réaliser un basculement des guides 23 et 24 vers l'extérieur du chemin 18 autour de ces axes 44 et à l'encontre d'un organe de rappel 45 tendant à amener les guides 23 et 25 au-dessus du chemin 18.

Pour gainer un faisceau d'éléments filaires 33 au moyen d'un ruban 31 enroulé autour de celui-ci et dont les bords sont réunis, on procède selon l'invention de la manière suivante.

On engage l'extrémité du ruban 21 dans le V de guidage 29, après avoir écarté les blocs de guidage 7 et 8 l'un de l'autre et soulevé les guides horizontaux 23 et 25 en faisant basculer leur support autour de l'axe 44. On place dans le V du ruban ainsi formé et qui se prolonge jusqu'au moins la première paire de galets 9, 12, l'extrémité du faisceau 33 à gainer, puis on resserre les galets contre les ailes de ce V en rabattant les guides horizontaux 23 en 25 au-dessus du chemin de passage 18. Selon le nombre ou le diamètre des éléments filaires qu'il s'agit de gainer, la section du faisceau peut varier entre des dimensions extrêmes (par exemple 8 et 32 mm) comme l'illustre la figure 4. Bien entendu la largeur du ruban 31 sera adaptée aux dimensions du faisceau 33 à gainer. La partie A de figure 4 illustre la position prise par le ruban et par le faisceau sous le guide 23, ce dernier provoquant le rabattement d'une des ailes du V que forme le ruban au-dessus du faisceau. Les galets 10 et 13 situés au centre de la tête de soudure laissent accès au dièdre (ou pseudo-dièdre) que forme les deux bords 31a et 31b du ruban l'un rabattu sur le faisceau et l'autre dressé le long du galet 10. C'est en direction de l'angle de ce dièdre que ia buse 36 souffle l'air chaud nécessaire à la réalisation d'une fusion partielle de la surface extérieure du bord 31a et de la surface intérieure du bord 31b. Le faisceau, entraîné par les galets poursuit son déplacement pour atteindre le troisième jeu de galets 11, 14 au niveau duquel il passe sous le deuxième guide 25 horizontal qui procède au rabattement du bord 31b sur le bord 31a et au collage de leurs surfaces en regard l'une de l'autre et à l'état semi-fondu.

Si le faisceau 33 présente une dérivation 43, celle-ci sera guidée pour être orientée verticalement vers le haut entre les galets de la tête de soudure et au passage de cette dérivation 43, d'une part la douille 40 vient ouvrir l'évent 39 afin de détourner une grande partie de l'air chaud qu'elle destine normalement à souffler sur le faisceau et d'autre part cette dérivation agit mécaniquement sur les guides horizontaux 23 et 25 qui s'effacent dans un plan horizontal autour de leur axe d'articulation 27 et à l'encontre du ressort 28. Dès que la dérivation 43 est passée, les guides reprennent leur place et le gainage tubulaire de la partie sans dérivation qui suit cette dérivation peut se poursuivre.

Dans une version automatisée de cette machine, on peut tout à fait concevoir que la détection d'une dérivation à proximité des galets d'entraînement conduise à par exemple une réduction de la vitesse d'entraînement, et au déplacement du piston 38 pour découvrir plus ou moins partiellement l'évent 37 et ainsi détourner une partie du flux d'air chaud destiné à fondre partiellement les bords du ruban. La dérivation étant passée, la vitesse d'entraînement peut retrouver une valeur plus élevée et le débit de soufflage restauré.

Avec la machine selon l'invention et selon son procédé, on traite un faisceau complexe en gainant successivement, après la branche maîtresse, toutes les branches dérivées de celle-ci. Le faisceau issu de l'invention possède bien entendu à l'endroit de chaque embranchement, des zones découvertes qui ne nuisent en rien aux qualités que l'on souhaite obtenir d'un faisceau gainé. Il est cependant possible de faire une reprise manuelle de ce faisceau pour combler ses espaces non gaines mais ce au détriment du coût de revient de sa fabrication.

L'invention, en ce qui concerne la machine, a été décrite comme une installation fixe dans laquelle le faisceau est entraîné. On peut tout à fait imaginer, sans sortir du cadre de cette invention, que la tête de soudure soit portée par un outil à main que l'on déplacerait le long d'un faisceau de câble maintenu stationnaire par ses extrémités, et à certains endroits notamment au voisinage des dérivations.

## Revendications

1. Procédé de fabrication d'un faisceau d'éléments filaires (33) du genre câbles électriques ou tubulures de longueur finie, comportant au moins un point d'embranchement pour une branche (43) dérivée selon lequel on enveloppe des éléments filaires (33) dans un matériau isolant (31) thermofusible plan roulé transversalement autour d'eux et dont les bords longitudinaux sont réunis par soudure, caractérisé en ce qu'on procède au gainage successif de chacune des branches (33, 43) du faisceau au moyen d'un ruban (31) enroulé transversalement autour des éléments filaires (33) et dont les bords (31a, 31b) sont réunis par soudure sauf à l'endroit de chaque point d'embranchement de chaque branche (43) dérivée.

2. Procédé selon la revendication 1, caractérisé en ce que l'apport calorifique pour la soudure est réalisé par soufflage d'air chaud sur la face extérieure d'une marge (31a) du ruban (31) et sur la face intérieure de la marge (31b) opposée pendant que ces marges défilent devant le flux d'air chaud en étant maintenues de manière à former un dièdre, la soudure consistant ensuite à rabattre l'une (31b) contre l'autre (31a) les marges ainsi chauffées.

3. Procédé selon la revendication 1 ou la revendication 2, caractérisé en ce que l'on règle l'apport calorifique en détournant une partie réglable du flux d'air chaud normalement dirigé dans l'angle du dièdre susdit.

4. Procédé selon l'une quelconque des revendications 1 à 3, caractérisé en ce qu'au passage des embranchements, on procède à un détournement supplémentaire du flux d'air chaud.

5. Machine de fabrication d'un faisceau (33) d'éléments filaires du genre câbles électriques ou tubulures de longueur finie comportant au moins un point d'embranchement pour une branche dérivée (43) par enveloppement de ses éléments dans un ruban (31) de matériau isolant thermofusible roulé transversalement autour du faisceau et dont les bords longitudinaux (31a, 31b) sont réunis par soudure, caractérisée en ce qu'elle comporte une tête de soudure comprenant deux rangées (7, 8) d'une pluralité de galets (9 à 14) d'entraînement du faisceau (33) et du ruban (31) sur lequel ils reposent, le ruban étant préalablement conformé en V par un guide (29) situé en amont de ces galets, ces rangées de galets définissant entre elles un chemin de passage (18) du faisceau, ouvert en partie supérieure successivement sous un premier guide (23) horizontal de rabattement de l'une des branches du V contre le faisceau, sous une buse (36) de soufflage d'air chaud dans l'angle formé par la branche (31a) rabattue et la branche (31b) non rabattue du V, et sous un second guide horizontal (25) de rabattement de la seconde branche (31b) du V sur la première (31a) déjà rabattue, les guides horizontaux (23,25) étant effaçables au passage des embranchements (43) que comporte le faisceau (33), à l'encontre de l'effet d'un organe de rappel (28) tendant à les maintenir en position de service.

6. Machine selon la revendication 5, caractérisée en ce que la buse de soufflage (36) de l'air chaud comporte une dérivation (39) en amont de son extrémité au-dessus du chemin de passage (18), dont la section est ouverte ou fermée selon qu'un embranchement (43) du faisceau (33) est présent ou absent dans le chemin de passage (18).

7. Machine selon la revendication 5 ou la revendication 6, caractérisée en ce que la largeur du chemin de passage (18) du faisceau (33) est réglable, chaque rangée de galets étant solidaire d'un bloc support (7, 8) déplaçable transversalement au chemin de passage (18) du faisceau à l'encontre d'un organe de rappel (19) tendant à rendre minimale la largeur de ce chemin de passage (18).

8. Machine selon l'une quelconque des revendications 5 à 7, caractérisée en ce que le chemin de passage (18) est limité par un fond (32) incliné par rapport à la direction de l'axe des galets.

9. Machine selon l'une quelconque des revendications 5 à 8, caractérisée en ce que le guide amont (29) conformant la bande en V est réglable en altitude en fonction de la largeur du chemin de passage (18).

10. Machine selon l'une quelconque des revendications 5 à 9, caractérisée en ce que les premier et second guides de rabattement horizontaux (23,25) sont escamotables entre leur position de service au-dessus du chemin de passage (18) du faisceau et une position libérant l'accès supérieur de ce chemin pour l'introduction d'un nouveau faisceau à gainer.

11. Machine selon l'une quelconque des revendications 5 à 10, caractérisée en ce que la buse (36) de soufflage de l'air chaud comporte une dérivation (37) en amont de son extrémité au-dessus du chemin de passage (18), dont la section est réglable en fonction de la vitesse d'entraînement du faisceau par les galets.

## Patentansprüche

1. Verfahren zum Herstellen eines Bündels aderförmiger Elemente (33) nach Art von elektrischen Leitungen oder Schläuchen endlicher Länge mit mindestens einer Abzweigungsstelle für einen Zweigstrang (43), wobei man die aderförmigen Elemente (33) mit einem wärmeschmelzbaren flachen Isoliermaterial (31) umhüllt, das quer um sie herumgewickelt wird und dessen Längsränder durch Verschweißen miteinander verbunden werden, dadurch **gekennzeichnet**, daß man jeden der Zweigstränge (33, 43) des Bündels sukzessive mittels eines Bandes (31) umhüllt, das quer um die aderförmigen Elemente (33) gewickelt wird und dessen Ränder (31a, 31b) durch Verschweißen miteinander verbunden werden mit Ausnahme an der Abzweigungsstelle jedes Zweigstranges (43).

2. Verfahren nach Anspruch 1, dadurch **gekennzeichnet**, daß die Zufuhr von Wärme zum Schweißen durch das Zuführen eines Warmluftstromes gegen die Außenfläche eines Randes (31a) des Bandes (31) und gegen die Innenfläche des entgegengesetzten Randes (31b) erfolgt, während diese Ränder an dem Warmluftstrom vorbeilaufen und dabei in Form eines Dieders gehalten werden, wobei das Schweißen anschließend durch Umklappen eines (31b) der derartig erwärmten Ränder gegen den anderen (31a) erfolgt.

3. Verfahren nach Anspruch 1 oder 2, dadurch **gekennzeichnet**, daß man die Wärmezufuhr in der Weise regelt, daß man einen regelbaren Teil des Warmluftstromes ablenkt, der normalerweise in den Winkel des Dieders gerichtet ist.

4. Verfahren nach einem der Ansprüche 1 bis 3, dadurch **gekennzeichnet**, daß beim Vorbeilaufen der Abzweigstellen eine zusätzliche Ablenkung des Warmluftstromes erfolgt.

5. Maschine zur Herstellung von Bündeln (33) aderförmiger Elemente nach Art von elektrischen Leitungen oder Schläuchen endlicher Länge mit mindestens einer Abzweigstelle für einen Zweigstrang (43) durch Einhüllen seiner Elemente mit einem Band (31) aus wärmeschmelzbarem Isoliermaterial, das quer um das Bündel herumgewickelt wird und dessen Längsränder (31a, 31b) durch Schweißen miteinander verbunden werden, dadurch **gekennzeichnet**, daß sie einen Schweißkopf hat mit zwei Reihen (7, 8) von mehreren Rollen (9 bis 14) zum Antrieb des Bündels (33) und des Bandes (31), an dem sie anliegen, wobei das Band (31) durch eine stromaufwärts dieser Rollen gelegene Führung (29) vorher in eine V-Form gebracht wird, wobei ferner die Rollenreihen zwischen sich einen in seinem oberen Abschnitt offenen Transportweg (18) für das Bündel begrenzen, der sich nacheinander unter einer ersten Horizontalführung (23) zum Umklappen eines der V-Schenkel gegen das Bündel, unter einer Warmluftdüse (36) zum Zuführen von Warmluft in den Winkel zwischen dem umgeklappten V-Schenkel (31a) und dem nichtumgeklappten V-Schenkel (31b) und unter einer zweiten Horizontalführung (25) zum Umklappen des zweiten V-Schenkels (31b) gegen den bereits umgeklappten ersten V-Schenkel (31a) erstreckt, und wobei die Horizontalführungen (23, 25) beim Durchlauf der Verzweigungsstellen (43) des Bündels (33) gegen die Wirkung eines Rückstellorgans (28) ausrückbar sind, das sie in ihrer Arbeitsstellung zu halten sucht.

6. Maschine nach Anspruch 5, dadurch **gekennzeichnet**, daß die Warmluftdüse (36) stromaufwärts seines oberhalb des Transportweges (18) liegenden Endes einen Zweigkanal (39) hat, dessen Querschnitt geöffnet oder geschlossen ist je nachdem, ob eine Verzweigungsstelle (43) des Bündels (33) in dem Transportweg (18) vorhanden ist oder nicht.

7. Maschine nach Anspruch 5 oder 6, dadurch **gekennzeichnet**, daß die Breite des Transportweges (18) des Bündels (33) einstellbar ist, wobei jede Rollenreihe mit einem Trägerblock (7, 8) verbunden ist, der quer zum Transportweg (18) des Bündels entgegen der Wirkung eines Rückstellorgans (19) ausrückbar ist, welches die Breite des Transportweges (18) so schmal wie möglich zu halten sucht.

8. Maschine nach einem der Ansprüche 5 bis 7, dadurch **gekennzeichnet**, daß der Transportweg (18) durch einen Boden (32) begrenzt ist, der gegenüber der Rollenachse geneigt ist.

9. Maschine nach einem der Ansprüche 5 bis 8, dadurch **gekennzeichnet**, daß die stromaufwärts gelegene Führung (29), welche dem Band eine V-Form verleiht, in Abhängigkeit der Breite des Transportweges (18) in ihrer Höhe verstellbar ist.

10. Maschine nach einem der Ansprüche 5 bis 9, dadurch **gekennzeichnet**, daß die erste und die zweite Horizontalführung (23, 25) zum Umklappen der V-Schenkel zwischen ihrer Arbeitsstellung oberhalb des Transportweges (18) des Bündels und einer Stellung verstellbar sind, in welcher sie den Zutritt von oben zu dem Transportweg zum Einführen eines neuen zu umhüllenden Bündels freigeben.

11. Maschine nach einem der Ansprüche 5 bis 10, dadurch **gekennzeichnet**, daß die Warmluftdüse (36) stromaufwärts ihres oberhalb des Transportweges (18) gelegenen Endes eine Ableitung (37) hat, deren Querschnitt in Abhängigkeit der Antriebsgeschwindigkeit des Bündels durch die Rollen einstellbar ist.

## Claims

1. A method of manufacturing a bundle (33) of thread-like elements such as tubes or electric cables of finite length, in which the bundle includes at least one junction point for a branch (43), and in which the thread-like elements are enveloped in a plane thermofusible insulating material (31) that is wrapped transversely about the elements and that has its longitudinal edges united by welding, the method being characterized in that each of the branches (33,43) of the bundle is sheathed in succession by means of a respective tape (31) that is wrapped transversely and that has its edges (31a,31b) united by welding except at the location of each jonction point of each branch (13).

2. A method according to claim 1, characterized in that the heat for welding is provided by blowing hot air against the outside face of one margin (31a) of the tape (31) and against the inside face of the opposite margin (31b) while said margins are moving past the flow of hot air and while they are being held so as to form a groove, welding subsequently consisting in pressing one (31b) of the margins heated in this way against the other (31a).

3. A method according to claim 1 or claim 2, characterized in that the heat applied is regulated by diverting an adjustable fraction of the flow of hot air that would otherwise be directed into the angle of the above-mentioned groove.

4. A method according to any one of claims 1 to 3, characterized in that whenever a branch goes past, additional hot air is diverted.

5. A machine for manufacturing a bundle (33) of thread-like elements such as tubes or electric cables of finite length, the bundle including at least one junction point for a branch (43), and the elements of the bundle being covered in a tape (31) of thermofusible insulating material wrapped transversely around the bundle with the longitudinal edges (31a, 31b) of the tape being united by welding, the machine being characterized in that it includes a welding head comprising two rows (7, 8) each of a plurality of drive wheels (9 to 14) for driving the bundle (33) and the tape (31) against which the wheels bear, a V-shape previously being imparted to the tape by- a guide (29) situated upstream from said wheels, said rows of wheels defining between them a through path (18) for the bundle, which path is upwardly open and passes successively beneath a first horizontal guide (23) for folding down one of the sides of the V-shape against the bundle, beneath a nozzle for blowing hot air into the angle formed between the folded-down side (31a) and the non-folded-down side (31b) of the V-shape, and beneath a second horizontal guide (25) for folding down the second side (31b) of the V-shape against the already folded-down first side (31a), the horizontal guides (23, 25) being retractable when branches (43) of the bundle (33) go past, the guides being retractable against return members (28) tending to keep them in the operating position.

6. A machine according to claim 5, characterized in that the hot air blast nozzle (36) includes a vent outlet (39) upstream from its end over the through path (18), with the section of said outlet being opened or closed depending on whether a branch (43) of the bundle (33) is present or absent in the through path (18).

7. A machine according to claim 5 or claim 6, characterized in that the width of the through path (18) for the bundle (33) is adjustable, each row of wheels being secured to a respective support block (7, 8) that is displaceable transversely to the through path (18) of the bundle against a return member (19) tending to minimize the width of the through path (18).

8. A machine according to any one of claims 5 to 7, characterized in that the through path (18) is delimited by a bottom (32) that slopes relative to the direction of the wheel axes.

9. A machine according to any one of claims 5 to 8, characterized in that the upstream guide (29) for imparting a V-shape to the tape is adjustable in height as a function of the width of the through path (18).

10. A machine according to any one of claims 5 to 9, characterized in that the first and second horizontal folding-down guides (23, 25) are retractable between their operating positions over the through path (18) for the bundle and positions that disengage top access to the path for insertion of a new bundle to be sheathed.

11. A machine according to any one of claims 5 to 10, characterized in that the hot air blast nozzle (36) includes a vent outlet (37) upstream from its end over the through path (18), the section of the outlet being adjustable as a function of the speed at which the bundle is driven by the wheels.
